# EUROPÄISCHE PATENTSCHRIFT

(11) **EP 1 489 157 B1**
(45) Veröffentlichungstag und Bekanntmachung des Hinweises auf die Patenterteilung: **13.08.2008**
(21) Anmeldenummer: 04014000.6
(22) Anmeldetag: 15.06.2004
(51) Int. Cl.: C10G 3/00, C10G 1/00, C10G 1/08, C10G 11/02

(54) **Verfahren zum Konvertieren von fett- oder ölhaltigen Roh- und Abfallstoffen in Gemische mit hohem Kohlenwasserstoffanteil**
Process for converting of raw materials and waste materials containing oil or fat in a composition containing hydrocarbons
Procédé pour convertir de déchets et matières premières contenant de l'huile ou de la graisse en un mélange contenant des hydrocarbures

(30) Priorität: 16.06.2003 DE 10327059
(43) Veröffentlichungstag der Anmeldung: 22.12.2004
(73) Patentinhaber: Fraunhofer-Gesellschaft zur Förderung der angewandten Forschung e.V., 80686 München (DE)
(72) Erfinder: Cinquemani, Claudio, 64720 Michelstadt (DE); Heil, Volker, 46145 Oberhausen (DE); Jakob, Jochen, 46499 Hamminkeln (DE); Weber, Andreas, 44149 Dortmund (DE)
(74) Vertreter: Olgemöller, Luitgard Maria

(56) Entgegenhaltungen:
- US-A- 1 913 941
- US-A- 1 960 951
- US-A- 5 186 722
- US-A- 5 364 524

## Beschreibung

Die Erfindung betrifft ein Verfahren zum Umwandeln von Abfallfetten/-ölen in Gemische mit hohem Kohlenwasserstoffanteil, die als Wertstoffe, z.B. Brenn- oder Kraftstoffe nutzbar sind. Das Verfahren stellt damit nicht nur die Nutzbarmachung von Altmaterialien zur Verfügung, sondern vermeidet auch, dass diese kostspielig beseitigt werden müssen.

In der Vergangenheit gab es eine Reihe von Vorschlägen, gebrauchte Fette oder Öle bzw. artverwandte Stoffe zu verwerten, um daraus wiederum Kraftstoffe oder andere Energieträger zurückzugewinnen. So beschreibt die DE 196 20 378 C2 die Konvertierung von Abfallfetten in einem dreistufigen Verfahren, dessen Stufen aus Verfahrensschritten bei jeweils steigenden Temperaturen und unterschiedlichen Katalysatoren bestehen. Im ersten Schritt wird das Fett in Gegenwart von modifiziertem Aluminiumoxid und Zeolithen bei 320-400°C decarboxyliert und/oder von Heteroverbindungen befreit, im zweiten erfolgt eine Dehydratisierung und Isomerisierung der Produkte bei 340-450°C in Gegenwart von röntgenamorphen Alumosilicaten oder Zeolithen. Der dritte Schritt dient der Isomerisierung und Reformierung; er wird bei 380-550°C in Gegenwart von übergangsmetallmodifiziertem Aluminium oder einem anderen solchen Katalysator durchgeführt. In der DE 197 30 876 A1 wird vorgeschlagen, einem Verbrennungsmotor eine Pyrolyseeinheit zur Aufbereitung von Altfetten vorzuschalten, in der der Kraftstoff in einem Wärmetauscher auf eine Temperatur von ca. 300°C erwärmt wird, Als Reaktionsbeschleuniger kann, muss aber nicht, ein nicht näher spezifizierter Katalysator zum Einsatz kommen. Das Produkt wird so, wie es ist, bzw. nach Kondensation direkt in den Motor eingespritzt.

Das US-Patent 1,960,951 beschreibt ein Verfahren zum katalytischen Umwandeln von u. a. pflanzlichen Ölen zur Gewinnung flüchtigerer Produkte. Das Verfahren wird mit Aktivkohle als Katalysator unter Druck durchgeführt. Sauerstoff ist dabei zumindest gemäß seiner Partialdruck-Löslichkeit im Öl vorhanden, da dieses über Luft komprimiert wird.

Das US-Patent 5,186,722 betrifft ein Verfahren zum Herstellen von Kraft- oder Brennstoffen aus Biomasse, beispielsweise Öl aus Ölsaaten. Hierfür wird ein typischer, metallischer oder metallhaltiger Hydrierkatalysator eingesetzt, der in die Flüssigkeit eingebracht wird.

Alternativ werden zur Aufarbeitung/Wiederverwertung die mechanische Reinigung, die Aufhellung dunkel gewordener Öle mittels Adsorbentien, der Einsatz als Altfett-Natur-Diesel bzw. Altfettmethylester (AME) oder Verwertung in Biogasanlagen vorgeschlagen. Auch die thermische Nutzung ist ein gängiger Verwertungsweg.

Politische Reaktionen auf die Futtermittelskandale der vergangenen Jahre führten dazu, dass der bisherige hauptsächliche Verwertungsweg (Einsatz als Futteröl im Mischfutter) zunehmend an Bedeutung verliert, gleichzeitig aber die Notwendigkeit bestehen bleibt, das anfallende Altfettaufkommen einer geregelten Verwertung zuzuführen. Nachteilig dabei ist die schwankende Qualität der Fettgemische, die beispielsweise einer direkten Verwendung in der chemischen Industrie entgegenstehen. Die Verwendung von Altfett-Diesel bleibt aufgrund von technischen Problemen unempfindlichen Stationärmotoren mit beheiztem Kraftstoffsystem vorbehalten. Die Verwendung von Altfettmethylesterdiesel (AME) beispielsweise führt zum Erlöschen der Garantie von Fahrzeugen mit Biodieselfreigabe.

Auf der anderen Seite ist es heute ein wichtiges Ziel, den Anteil an regenerativen Kraftstoffen möglichst stark zu erhöhen. Wie aus dem Newsletter Juli 2002 des Netzwerks regenerative Kraftstoffe (Zentrum für Sonnenenergie- und Wasserstoff-Forschung Baden Württemberg (ZSW), Regenerative Energieträger und Verfahren (REG) www.refuelnet.de hervorgeht, wird Biodiesel (also Pflanzenöl bzw. Methylester aus eigens zur Biokraftstoffgewinnung angebauten Pflanzen) als derzeit "einzig etablierter Biokraftstoff in Deutschland" bezeichnet. Forschungsprojekte "befassen sich mit der Extraktion von Öl aus Pflanzen, der Fermentation biogener Substrate zu Ethanol oder Biogas sowie der thermochemischen Umwandlung (Vergasung oder Pyrolyse) von Biomasse zur Herstellung von Synthesegasen für die Kraftstofferzeugung".

Dies zeigt, dass ein großer Bedarf an der Bereitstellung neuer, einfacher Verfahren besteht, die zu unproblematisch weiterverarbeitbaren oder direkt nutzbaren Produkten aus bereits vorhandenen Fetten und/oder Ölen führen und z.B. den kalorischen Gehalt der Fette bzw. Öle nicht verloren gehen lassen.

In dem US-Patent 1,913,941 wird vorgeschlagen, aus niedersiedenden aliphatischen und hydroaromatischen Kohlenwasserstoffen, die aus Kohlen, Teeren, Mineralölen, Destillationsprodukten, Rückständen aus Crackprozessen und dgl. stammen, unter Verwendung von Aktivkohle Kohlenwasserstoffe zu erzeugen. Das US-Patent 5,364,524 beschreibt ein Verfahren zum Behandeln von Schwerölen, um dessen Qualität zu verbessern und den Transport in Pipelines und die weitere Verarbeitung zu erleichtern. Zu diesem Zweck wird das Öl in Gegenwart eines kohlenwasserstoffreaktiven Oxidationsmittels, vor allem H₂O, CO₂ oder O₂, durch ein Festbett aus aktiviertem Kohlenstoff geleitet.

Aufgabe der vorliegenden Erfindung ist es deshalb, ein Verfahren bereitzustellen, mit dem sich Alt- oder Rohmaterialien mit hohem Fett- und/oder Ölgehalt in ein Produkt mit hohem Kohlenwasserstoffgehalt umwandeln lassen.

Die Aufgabe wird durch die Bereitstellung des Verfahrens gemäß Anspruch 1 gelöst. Dabei werden die Fette gespalten und die Fettsäuren decarboxyliert und zu kürzerkettigen Kohlenwasserstoffen abgebaut. Der Produktgasstrom (er enthält in der Regel Kohlenwasserstoffe, Kohlenmonoxid, Kohlendioxid, Wasserstoff und Inertgas und je nach Ausgangsmaterial ggf. weitere Komponenten) wird, soweit sinnvoll, zur Kondensation gebracht und gegebenenfalls in die gewünschte Produktpalette aufgetrennt; leichtflüchtige Komponenten können nach Abtrennen der übrigen Bestandteile zur Beheizung des Reaktors energetisch genutzt werden, so dass die Reaktion im Regelbetrieb energieautark verläuft. Außerdem kann zusätzlich oder alternativ der nicht brennbare Anteil (CO₂, N₂) des Produktgasstroms zur weiteren Inertisierung des Reaktors zurückgeführt werden.

Das mit dem erfindungsgemäßen Verfahren erhaltene Produktgemisch ist im wesentlichen ein Kohlenwasserstoffgemisch, das sowohl als regenerativer Kraftstoff (beispielsweise "Bio-Flugbenzin") als auch nach entsprechender Auftrennung als Chemiegrundstoff (Basischemikalien, Lösungsmittel) oder in anderen Bereichen der chemischen Industrie Verwendung finden kann. Es kann dabei gegebenenfalls auch in zeitlicher oder räumlicher Nähe zu seiner Herstellung direkt weiterverwendet werden, beispielsweise durch die Anordnung des Konvertierungsreaktors in Kombination mit einer Verbrennungsmaschine für die Erzeugung von Energie (z.B. in Fahrzeugmotoren)

Die Erfindung trägt gleichzeitig zur Lösung verschiedener aktueller Problemstellungen bei: einerseits fallen nicht nur in Deutschland, sondern in allen industrialisierten Ländern große Mengen Abfallfette an, für die geeignete Verwertungsmöglichkeiten (die stoffliche Verwertung ist gegenüber der thermischen Nutzung prioritär, wenn der Heizwert nicht bei einem Feuerungswirkungsgrad von mindestens 75% mehr als 11000 kJ/kg beträgt, KrW/AbfG) gefragt sind. Dies um so mehr, als die bisher gängige Verwertung in Futtermitteln auf Grund der Futtermittelskandale weitgehend an Bedeutung verliert, Altfettmethylester AME die gängige Dieselnorm DIN 51606 nicht erfüllen und die Garantie gegen Motorschäden beim AME-Betrieb eines Fahrzeugs mit Biodieselfreigabe erlischt.

Andererseits verfolgt die EU-Kommision für erneuerbare Kraftstoffe ehrzeizige Ziele: bis 2006 sollen 6% des Kraftstoffes im Bereich der EU aus regenerativen Quellen stammen und damit die Emission aus fossilen Quellen stammenden Kohlendioxids verringert werden (Umsetzung des Kyoto-Protokolls). Daneben gibt die Kommision in ihrem Weissbuch das strategische Ziel vor, den Anteil regenerativer Energieträger bis 2010 auf 12% zu erhöhen (ohne dass diese politische Vorgabe rechtsverbindlich ist).

Die Erfindung streift also zwei gesellschafts-/energiepolitisch belangreiche Felder; neben bereits etablierten Entsorgungswegen für gebrauchte Fette und ähnliche Stoffe wird ein weiterer Verwertungsweg aufgezeigt, welcher zu einem Produkt führt, das Erzeugnisse der petrochemischen Industrie aus regenerativer Quelle bereitstellt.

Als Einsatzstoff kommen biogene und/oder künstlich erzeugte ("anthropogene") Fette und -öle (insbesondere Altfette und -öle) und Fettsäuren sowie artverwandte Stoffe, insbesondere Alt- und Gebrauchtfette sowie native, künstlich erzeugte oder modifizierte Fette wie auch fett- oder kohlenwasserstoffhaltige Abscheiderinhalte aus industriellen, kommunalen und gewerblichen Abscheidern, Rückstände aus Schlachthöfen oder Tierkörperbeseitigungsanstalten, darunter auch z.B. gebrauchte natürliche oder künstliche Frittierfette und dgl., in Frage.

Gebrauchte Speisefette können naturgemäß abhängig von ihrer Verwendung feste Rückstände aufweisen. Kommerzielle Fettsammler führen von einer Weitergabe in der Regel eine mechanische Reinigung (Filtration) durch. Um sicher zu stellen, dass möglicherweise trotzdem noch vorhandene Partikel nicht zu einer Verstopfung der Einspeisevorrichtung führen, ist es empfehlenswert, das Ausgangsmaterial vor der Konvertierung durch eine mechanische Reingung von festen Fremdbestandteilen zu befreien, was beispielsweise am Einfüllstutzen oder dgl. des Reaktors erfolgen kann, in dem die Konvertierung erfolgen soll.

Als Reaktor kann ein beliebiger, in geeigneter Weise heizbarer Ofen, z.B. eine Röhrenofen eingesetzt werden, beispielsweise ein Drehrohrofen. Das Aktivkohle-Festbett kann darin in beliebiger Weise so angeordnet sein, dass das die zu konvertierenden Stoffe enthaltende Gas es durch- oder überstreichen. Beispielhaft sei für diesen Zweck ein senkrecht oder waagrecht gelagertes Quartzrohr genannt.

Die zu konvertierenden Stoffe werden in gasförmiger oder dampfförmiger Gestalt in den Konvertierungsreaktor eingebracht. Hierfür können sie bereits vor Einleiten in den Reaktor oder aber auch erst in diesem vor dem Kontakt mit dem Aktivkohle-Festbett teilweise vorgewärmt oder bereits auf die Umsetzungstemperatur gebracht werden. . Der Kontakt mit dem Aktivkohlefestbett kann dadurch erfolgen, dass ein Gasstrom mit gasförmigen oder dampfförmigen Ausgangssubstanzen durch das Bett geleitet wird. Der Kontakt des zu konvertierenden Materials mit dem Katalysator-Festbett kann diskontinuierlich oder in einem kontinuierlichen Substanzstrom erfolgen.

Zur Inertisierung des Reaktorraums sollte dieser vorab mit einem Inertgas wie Stickstoff gespült sein. Werden die zu konvertierenden Stoffe bereits gasförmig in den Reaktor eingebracht, bietet es sich an, sie in einem Gasstrom aus Inertgas aufzunehmen und mit diesem in den Reaktor zu überführen. Stattdessen kann das Inertgas auch getrennt in den Reaktor geleitet werden. Die Inertisierung des Reaktorraums ist notwendig, da ansonsten bei hohen Temperaturen die Kohle verbrennen würde. Außerdem zersetzen sich Fette an Luft bei entsprechend hohen Temperaturen unter Bildung von Acrolein (Abbauprodukt des Glycerins) und eines kohleartigen Rückstandes, statt sich wie gewünscht in Kohlenwasserstoffe und dgl. wie oben genannt umzusetzen.

Unter der katalytischen Wirkung der Aktivkohle werden die Fette ab 150°C bis 280°C in inerter Atmosphäre gespalten; die Fettsäuren werden decarboxyliert und zu kürzerkettigen Kohlenwasserstoffen abgebaut. Dieser Prozess erfolgt zwar auch in Abwesenheit der Aktivkohle. Allerdings ist die Ausbeute an Kohlenwasserstoffen dann sehr viel geringer.

Der vorstehend angegebene Aktivierungstemperaturbereich ist deshalb so breit angegeben, weil er von der tatsächlich eingesetzten Aktivkohle abhängt. In ganz speziellen Fällen kann die Aktivierungstemperatur sogar auch außerhalb dieses Bereichs liegen. Diverse Aktivkohlen unterscheiden sich sehr in Bezug auf die Initialtemperaturen, bei denen der Beginn der Konvertierungsreaktion beobachtet werden kann. Aktivkohlen können aus Holz-, Braun- und Steinkohle, aber auch aus Fruchtkernen oder-schalen (z.B. Olive, Kokos), Torf oder künstlich erzeugten Polymeren wie gebrauchten Ionenaustauscherharzen oder dgl. gewonnen werden. Sowohl die Herkunft als auch die Aufbereitung und Aktivierung (Pyrolyse, Wasserdampf- oder Chemikalien-Aktivierung, Art des eingesetzten Bindemittels, Art der Vermahlung, Compoundierung), ja sogar die eingesetzte Menge trägt zu spezifischen Eigenschaften der verschiedenen Aktivkohlen bei.

Dementsprechend hängt natürlich die optimale Temperatur für die innerhalb des weiter oben genannten Temperaturspektrums ablaufenden Reaktionen ebenfalls von der Natur der gewählten Aktivkohle ab. In der Regel sind aber Bereiche von 400-650°C, bevorzugt 450°C bis 600°C, unabhängig von deren Wahl besonders günstig. Durch die Wahl der konkreten Temperatur kann man das Produktspektrum wunschgemäß maßschneidern. Niedrigere Temperaturen führen allgemein zu einer niedrigeren Ausbeute an Kohlenwasserstoffen und liefern relativ viel Kohlenmonoxid und Kohlendioxid, das aus den Decarboxylierungsreaktionen stammen dürfte. Außerdem entsteht bei niedrigeren Temperaturen relativ viel Propen, bezogen auf die anderen bei Raumtemperatur gasförmigen Kohlenwasserstoffe, was auf eine Abspaltung von Glycerin aus den Fetten und dessen Umwandlung in seine Folgeprodukte Acrolein und Propen hindeutet, während der Propenanteil bei höheren Temperaturen zugunsten von C₁-C₄-Alkanen relativ absinkt. Weiterhin kann man bei höheren Temperaturen einen starken Abfall (auf ca. 50%) des Anteils der C₁₅- und der C₁₇-Fraktion (Decarboxylierungsprodukte von Palmitin- und Stearingsäure) zugunsten niedrigerer Kohlenwasserstoffe sowie die Bildung von mehr Wasserstoff beobachten.

Mit einer holzstämmigen, wasserdampfaktivierten Aktivkohle (SC44, Silcarbon) wurde ein Temperaturoptimum von 520-580°C für die Gewinnung von Kohlenwasserstoffen ermittelt; andere Aktivkohlen können aber durchaus ein etwas verändertes Produktspektrum liefern oder bei etwas höheren oder niedrigeren Temperaturen optimal wirken. Bemerkenswert ist, dass die Kohle erst nach einer Anlaufphase ihre optimale Aktivität erreicht. Ihr Gewicht kann im Laufe der Reaktion etwas zunehmen, ohne dass sich dadurch ihre Aktivität verringern würde, d.h., der sich auf ihr niederschlagende Kohlenstoff trägt im Verlauf der weiteren Umsetzung zur katalytischen Wirkung bei.

Der Produktgasstrom wird nach dem Durchlaufen des Katalysatorbettes bei Bedarf einer Gasaufbereitung zugeführt. Diese kann beispielsweise eine katalytische Hydrierstrecke umfassen, in der ungesättigte Kohlenwasserstoffe in Gegenwart von extern zugegebenem und/oder dem bei der Umsetzung entstandenen Wasserstoff (z.B. mit Palladium/Aktivkohle als Katalysator) hydriert werden.

Die Hydrierstrecke kann dem Konvertierungsreaktor nachgeschaltet oder im Konvertierungsreaktor hinter dem Aktivkohle-Festbett angeordnet sein. Alternativ ist es aber auch möglich, einen Teil der Aktivkohle mit einem geeigneten Hydrierungskatalysator zu imprägnieren oder einen solchen Hydrierungskatalysator in das Aktivkohlebett zu mischen. Als Imprägnierung eignen sich gängige Katalysatoren wie Palladium oder Platin, die in bekannter Weise in Form von Lösungen auf die Aktivkohle oder auf ein anderes geeignetes Material aufgebracht werden.

Die gasförmigen Produkte werden mit oder ohne Gasaufbereitungs-Zwischenschritt einer Separiereinrichtung, beispielsweise einer Kühleinrichtung zugeführt, in der die (je nach Bedingung z.B. ab C₅, C₆ oder C₇) kondensierbaren Kohlenwasserstoffe von den leichtflüchtigen Produkten getrennt werden können. Letztere können erfasst werden und zur weiteren Beheizung des Katalysators dienen. Gegebenenfalls kann auch das bei der Decarboxylierung entstandene CO₂ als Inertgas (zusammen mit dem bereits eingespeisten Stickstoff) in die Reaktionszone zurückgeführt werden können.

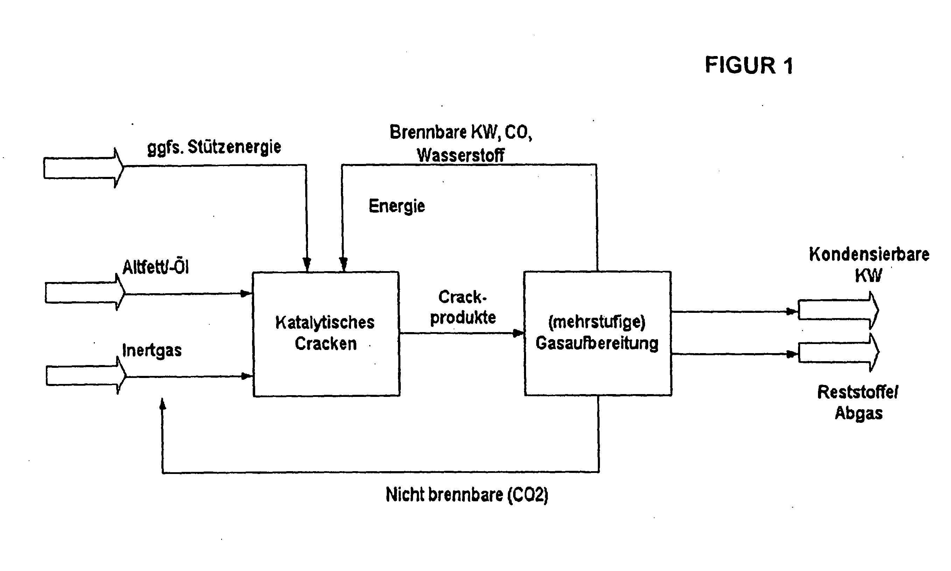

**Figur 1** zeigt eine schematische Fließskizze (Grundfließbild) der oben erwähnten möglichen Verfahrensschritte.

**Figur 2** zeigt ein Verfahrensfließbild unter Einschluß der entsprechenden Vorrichtungsbestandteile.

Die Ausbeute an kondensierbaren Kohlenwasserstoffen liegt im Bereich von etwa 50 Gew.-%, wie aus den obigen Erläuterungen ersichtlich, mit einer gewissen Schwankungsbreite in Abhängigkeit von der gewählten Temperatur und Aktivkohle. Je Tonne Fett ist daher mit etwa 625 I kondensierbaren Kohlenwasserstoffen zu rechnen. Dabei handelt es sich vor allem um eine Fraktion im Bereich von C₆ bis C₂₀. Daraus können ggf. einzelne Fraktionen abgetrennt werden, beispielsweise durch Druckwechseladsorption oder dgl.. Für Brennstoffe ist insbesondere ein Kohlenwasserstoffschnitt von Interesse, der in seinem Siedebereich und seiner Zusammensetzung nach in etwa Kerosin (Siedebereich 175-325°C, entsprechend C₁₀ bis C₁₇) entspricht. Desweiteren ist es möglich, die Produkte durch Rektifikation in ihre Komponenten zu zerlegen und diese im Chemiesektor zu nutzen. Kürzerkettige (C₆ bis C₉) Kohlenwasserstoffe können destillativ abgetrennt werden, kurzkettige Kohlenwasserstoffe können gegebenenfalls, zusammen mit dem entstandenen Wasserstoff und Kohlenmonoxid, wie oben erwähnt zur Beheizung des Reaktors thermisch genutzt werden. Damit wird die Beheizung des Reaktors in der Regel energieautark (die Bodouard-Reaktion (C + CO₂ ↔ CO) spielt bei knapp über 550°C noch keine große Rolle; bei Temperaturen über 600°C ist dagegen mit einem merklichem Umsatz und damit mit einem Verlust an Aktivkohle zu rechnen).

Wie erwähnt, muss bei nachwachsenden Kraftstoffen zwischen Biodiesel (aus eigens erzeugtem Pflanzenöl, Biodieselnorm DIN 51606 erfüllt, Einsatz in Motoren mit Biodieselfreigabe), Altfett-Naturdiesel (nur in robusten Motoren mit beheiztem Kraftstoffsystem einsetzbar) und Altfettmethylester AME (erfüllen DIN 51606 nicht, Einsatz in Motoren außerhalb der Garantiefristen) unterschieden werden. Die vorliegende Erfindung bietet gegenüber der Verwertung von Altfetten bzw. den AME als Kraftstoff in Dieselmotoren den Vorteil, dass durch die beschriebene thermochemische Konvertierung zunächst ein breiteres und damit vielseitiger nutzbares Produktspektrum generiert wird, welches seinerseits nach eventueller Aufarbeitung als Vergaserkraftstoff (die kondensierten KWS entsprechend in Kettenlänge und Siedebereich in etwa Kerosin) oder auch als Grundstoff (Lösungsmittel) in vielen Industriezweigen eingesetzt werden kann. Die Anwendungsmöglichkeiten des durch die Erfindung bereitgestellten Produkts sind somit gegenüber der reinen Nutzung in Selbstzündermotoren breiter.

Daneben bietet auch die Verfahrensführung Vorteile: Die Konvertierung erfolgt einstufig, und neben den kondensierbaren Kohlenwasserstoffen größerer Kettenlänge entstehen ebenfalls leichtflüchtige und auch Permanentgase wie Wasserstoffe bzw. Kohlenmonoxid, die energetisch genutzt werden können. Besonders vorteilhaft dabei ist es, dass diese auch zur Unterhaltung der notwendigen Reaktionstemperatur genutzt werden können.

Nachstehend soll die Erfindung anhand von Ausführungsbeispielen näher erläutert werden.

### Beispiel 1

Die Öffnung eines dicht schließenden Eisentiegels mit einem Volumen von ca. 0,5 I wird mit einem Flansch verschlossen, der mit Kapillaröffnungen für die Zuführung von Inertgas und die Abführung des Produktgasstroms versehen ist. Im Reaktor befindet sich eine Siebplatte mit ca. 14 cm Durchmesser, auf der sich eine Schüttung Aktivkohle (SC44 von Silcarbon, Kirchhundem, ca. 25 g) befindet. Das eingesetzte Fett (ca. 50 Gew.-% "Palmin" mit einem hohen Anteil an gesättigten Fettsäuren, ca. 50 Gew.-% Walnussöl mit einem erheblichen Gehalt an ungesättigten Fettsäuren) wird entweder auf die Aktivkohle getropft oder in einem Tiegel in einer Porzellanschale unter der Siebplatte vorgelegt und in dampfförmigem Zustand über die Kohle geleitet. Der Eisentiegel wird zum Aufheizen in einen Muffelofen gestellt.

Mit dieser Anordnung wurde eine Versuchsreihe zur Ermittlung der optimalen Temperatur durchgeführt. Durch entsprechende Beprobung und Analyse des Produktgasstroms konnte festgestellt werden, dass eine Ofentemperatur von 550°C entsprechend einer Tiegelinnentemperatur von ca. 520 °C ein optimiertes Produktspektrum (ca. 50 Gew.-% Ausbeute an Kohlenwasserstoffen, bezogen auf die eingesetzte Fettmenge) liefert. Bereits niedrigere Temperaturen (ca. 400°C) sind ausreichend, um die thermische Konvertierung zu starten und zu unterhalten, der Grad der Umwandlung der Fette in Kohlenwasserstoffe ist jedoch deutlich niedriger.

### Beispiel 2

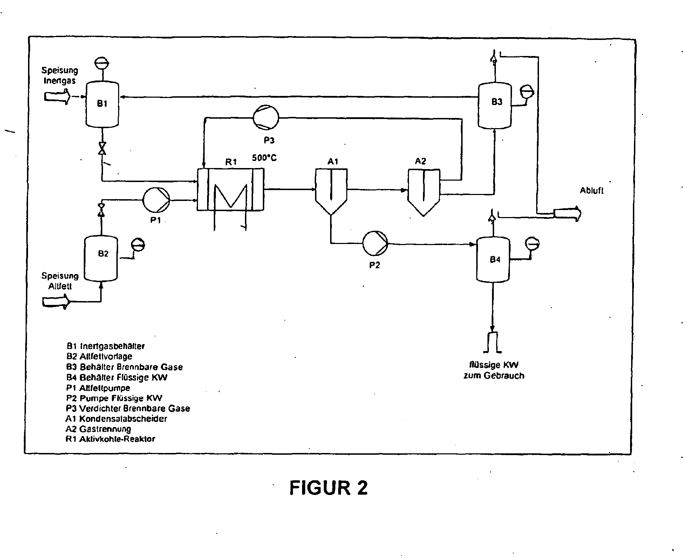

Die in diesem Beispiel beschriebenen Verfahrensschritte sind in **Figur 2** dargestellt. In einem Reaktor R1 in Form eines Drehrohrofens, der mit Aktivkohle bestückt ist, wird über einen Inertgasbehälter B1 Inertgas eingeleitet. Altfett gelangt über eine Altfettvorlage B2 und eine Altfettpumpe P1 in den Reaktor, wird dort soweit erhitzt, dass es verdampft, und sodann in einer auf eine geeignete Temperatur (bei SC44 beispielsweise über 400°C, vorzugsweise 520 - 550°C) gebrachten Reaktionszone durch das Aktivkohle-Bett des Reaktors geleitet. Der Produktgasstrom wird mit vorhandenem Inertgas in einen Kondensatabscheider A1 geführt, in dem die weniger flüchtigen Kohlenwasserstoffe (je nach Einstellung z.B. ab C₅, C₆ oder C₇) durch Kondensation abgetrennt werden. Diese können sodann in einem Behälter B4 aufgefangen und, je nach Bedarf, ihrer weiteren Bearbeitung (Aufreinigung, Fraktionierung) oder Verwertung zugeführt werden. Die flüchtigen Kohlenwasserstoffe werden zusammen mit den Permanentgasen (H₂, CO, CO₂) einer Gastrennung A2 zugeführt, wo sie von Inertgasen getrennt werden. Über einen Verdichter P3 können sie, ggf. zusammen mit den brennbaren Permanentgasen, in den Reaktor R1 zurückgeführt werden, um dort durch Verbrennung den Energieeintrag zu unterstützen oder autonom zu unterhalten. Der Reaktor kann aber natürlich auch durch externe Beheizung oder die Zufuhr von externem Brenngas auf Betriebstemperatur gehalten werden; in einer Anfangsphase ist eine externe Aufheizung unumgänglich. In der Gastrennung A2 kann auch entstandenes Kohlendioxid abgetrennt und zur Inertisierung direkt in den Reaktor oder aber in die Inertgaszufuhr-Leitung eingespeist werden. Die in der Gastrennung gewonnenen, leichtflüchtigen brennbaren Gase können statt in den Kreislauf rückgeführt zu werden auch in einem Behälter B3 gesammelt und einer externen Verwertung zugeführt werden.

## Patentansprüche

1. Verfahren zum Konvertieren eines triglyceridische Fette und/oder triglyceridische Öle und/oder Fettsäuren enthaltenden Ausgangsmaterials in ein kohlenwasserstoffhaltiges Produktgemisch, umfassend die Schritte:
- Kontaktieren des gas- oder dampfförmigen Ausgangsmaterials in Abwesenheit von Sauerstoff bei einer Temperatur von 150-850°C mit einem Festbett, das Aktivkohle als katalytisches Material aufweist, und
- Auffangen des kohlenwasserstoffhaitigen Produktgasstroms.

2. Verfahren nach Anspruch 1, **dadurch gekennzeichnet, dass** das fett- und/oder ölhaltige Ausgangsmaterial auf die genannte Temperatur von 150-850°C erwärmt und sodann mit dem Aktivkohle-Festbett in Kontakt gebracht wird.

3. Verfahren nach Anspruch 1, **dadurch gekennzeichnet, dass** das fett- und/oder ölhaltige Ausgangsmaterial ohne vorheriges Erhitzen oder nur teilweise vorgewärmt mit einem auf 150-850°C erhitzten Aktivkohle-Festbett in Kontakt gebracht wird.

4. Verfahren nach einem der voranstehenden Ansprüche, worin das Ausgangsmaterial in einem Konvertierungsreaktor bei 250°C, bis 800°C, vorzugsweise bei 400 bis 600°C und besonders bevorzugt bei 450°C bis 550°C mit dem Aktivkohle-Bett in Kontakt gebracht wird.

5. Verfahren nach einem der voranstehenden Ansprüche, worin das Ausgangsmaterial in einem Inertgasstrom durch das Aktivkohle-Bett geführt wird.

6. Verfahren nach einem der voranstehenden Ansprüche, worin die Aktivkohle ausgewählt ist unter einer oder mehreren holzstämmigen Aktivkohlen oder einer solchen Aktivkohle in Mischung mit einer anderen Aktivkohle und/oder worin die Aktivkohle ausgewählt ist unter einer oder mehreren mittels Wasserdampf, Kohlendioxid oder einem Wasserdampf-Kohlendioxidgemisch aktivierten Aktivkohlen.

7. Verfahren nach einem der voranstehenden Ansprüche, worin der Produktgasstrom nach dem Durchlaufen des Aktivkohle-Bettes einer Gasaufbereitung zugeführt wird.

8. Verfahren nach Anspruch 7, worin ungesättigte Kohlenwasserstoffe des Produktgasstroms katalytisch hydriert werden.

9. Verfahren nach Anspruch 8, wobei die Hydrierung in einer dem Konvertierungsreaktor oder dem Aktivkohle-Festbett nachgeschalteten Hydrierstrecke erfolgt oder wobei die Hydrierung am Aktivkohle-Festbett in Anwesenheit von Hydrierungs-Katalysator im Festbett erfolgt.

10. Verfahren nach einem der Ansprüche 7 bis 9, worin der Produktgasstrom, ggf. nach der Hydrierstrecke, einer Separiereinrichtung zugeführt wird, in der eine Produktauftrennung erfolgt.

11. Verfahren nach Anspruch 10, wobei eine Produktauftrennung in brennbare Permanentgase, kondensierbare Kohlenswasserstoffe, einzelne Fraktionen dieser kondensierbaren Kohlehswasserstoffe, Inertgase und/oder sonstige Nebenprodukte erfolgt, wobei die leichtflüchtigen Kohlenwasserstoffe und/oder die brennbaren Permanentgase optional teilweise oder vollständig zur Beheizung des Reaktors verwendet werden können.

12. Verfahren nach einem der voranstehenden Ansprüche, worin das bei der Konvertierung entstandene Kohlendioxid und/oder zugeführte Inertgas ganz oder teilweise in den Reaktor oder bereits vor dem Reaktor in den Inertgasstrom zurückgeführt wird.

13. Verfahren nach einem der voranstehenden Ansprüche, worin das Ausgangsmaterial Alt- bzw. Gebrauchtfett und/oder Altöl umfasst.

## Claims

1. A process for converting a starting material containing triglyceridic fats and/or triglyceridic oils and/or fatty acids to a hydrocarbon-containing product mixture, which comprises the steps:
- contacting the gaseous or vaporous starting material in the absence of oxygen at a temperature of 150 to 850°C with a fixed bed comprising activated carbon as a catalytic material, and
- collecting the hydrocarbon-containing product gas stream.

2. The process according to claim 1, **characterized in that** the fat- and/or oil-containing starting material is heated to said temperature of 150 to 850°C and is then contacted with the fixed activated carbon bed.

3. The process according to claim 1, **characterized in that** the fat- and/or oil-containing starting material is contacted with a fixed activated carbon bed heated to 150 to 850°C without previous heating or only partly preheated.

4. The process according to any of the preceding claims, wherein the starting material is contacted with the activated carbon bed in a conversion reactor at 250°C to 800°C, preferably at 400 to 600°C and especially preferred at 450°C to 550°C.

5. The process according to any of the preceding claims, wherein the starting material is guided through the activated carbon bed in an inert gas stream.

6. The process according to any of the preceding claims, wherein the activated carbon is selected from one or several activated carbons originating from wood or such an activated carbon in mixture with another activated carbon and/or wherein the activated carbon is selected from one or several activated carbons activated by means of steam, carbon dioxide or a mixture of steam and carbon dioxide.

7. The process according to any of the preceding claims, wherein the product gas stream is fed to a gas processing after having passed through the activated carbon bed.

8. The process according to claim 7, wherein unsaturated hydrocarbons of the product gas stream are catalytically hydrogenated.

9. The process according to claim 8, wherein the hydrogenation takes place in a hydrogenation portion connected downstream of the conversion reactor or the fixed activated carbon bed or wherein the hydrogenation takes place at the fixed activated carbon bed in the presence of a hydrogenation catalyst in the fixed bed.

10. The process according to any of claims 7 to 9, wherein the product gas stream, possibly downstream of the hydrogenation portion, is fed to a separating means, in which a product separation takes place.

11. The process according to claim 10, wherein a product separation takes place into combustible permanent gases, condensable hydrocarbons, individual fractions of these condensable hydrocarbons, inert gases and/or other by-products, wherein the high-volatile hydrocarbons and/or the combustible permanent gases can optionally be used partly or completely for heating the reactor.

12. The process according to any of the preceding claims, wherein the carbon dioxide formed during the conversion and/or the fed inert gas is wholly or partly returned into the reactor or into the inert gas stream already upstream of the reactor.

13. The process according to any of the preceding claims, wherein the starting material comprises used fat and/or used oil.

## Revendications

1. Procédé de conversion d'une matière de départ contenant des graisses triglycéridiques et/ou des huiles triglycéridiques et/ou des acides gras dans un mélange de produits contenant des hydrocarbures, comprenant les étapes consistant à :
- mettre en contact la matière de départ sous forme gazeuse ou vaporeuse avec un lit solide, qui présente du charbon actif comme matière catalytique, en l'absence d'oxygène à une température de 150 à 850°C et
- capter le courant de produit gazeux contenant des hydrocarbures.

2. Procédé selon la revendication 1, **caractérisé en ce que** la matière de départ contenant de la graisse et/ou de l'huile est chauffée à la température citée de 150 à 850°C et est ensuite mise en contact avec le lit solide de charbon actif.

3. Procédé selon la revendication 1, **caractérisé en ce que** la matière de départ contenant de la graisse et/ou de l'huile est mise en contact avec un lit solide de charbon actif chauffé à 150 - 850°C sans chauffage préalable ou bien avec un préchauffage partiel.

4. Procédé selon l'une des revendications précédentes, dans lequel la matière de départ est mise en contact avec le lit de charbon actif dans un réacteur de conversion à une température de 250°C à 800°C, de préférence à une température de 400°C à 600°C et particulièrement préférentiellement à une température de 450°C à 550°C.

5. Procédé selon l'une des revendications précédentes, dans lequel la matière de départ est conduite dans un courant de gaz inerte à travers le lit de charbon actif.

6. Procédé selon l'une des revendications précédentes, dans lequel le charbon actif est choisi parmi un ou plusieurs charbons actifs provenant du bois ou un charbon actif de ce type en mélange avec un autre charbon actif et/ou dans lequel le charbon actif est choisi parmi un ou plusieurs charbons actifs activés au moyen de la vapeur d'eau, du dioxyde de carbone ou d'un mélange de dioxyde de carbone et de vapeur d'eau.

7. Procédé selon l'une des revendications précédentes, dans lequel le courant de produit gazeux est amené à une installation de traitement des gaz après la traversée du lit de charbon actif.

8. Procédé selon la revendication 7, dans lequel les hydrocarbures insaturés du courant de produit gazeux sont hydrogénés catalytiquement.

9. Procédé selon la revendication 8, dans lequel l'hydrogénation s'effectue dans une ligne d'hydrogénation montée après le réacteur de conversion ou le lit solide de charbon actif ou dans lequel l'hydrogénation s'effectue sur le lit solide de charbon actif en présence du catalyseur d'hydrogénation dans le lit solide.

10. Procédé selon l'une des revendications 7 à 9, dans lequel le courant de produit gazeux est amené, le cas échéant après la ligne d'hydrogénation, à un dispositif de séparation, où une séparation du produit s'effectue.

11. Procédé selon la revendication 10, dans lequel une séparation du produit s'effectue en gaz combustibles permanents, hydrocarbures condensables, fractions individuelles de ces hydrocarbures condensables, gaz inertes et/ou autres sous-produits, les hydrocarbures facilement volatils et/ou les gaz combustibles permanents pouvant être partiellement ou entièrement utilisés pour chauffer le réacteur.

12. Procédé selon l'une des revendications précédentes, dans lequel le dioxyde de carbone résultant lors de la conversion et/ou le gaz inerte amené est renvoyé entièrement ou partiellement dans le réacteur ou, bien avant le réacteur, dans le courant de gaz inerte.

13. Procédé selon l'une des revendications précédentes, dans lequel la matière de départ comprend de la graisse usagée ou recyclée et/ou de l'huile usagée.
